# EUROPEAN PATENT APPLICATION

(11) **EP 0 747 304 A2**
(43) Date of publication of application: **11.12.1996**
(21) Application number: 96304239.5
(22) Date of filing: 06.06.1996
(51) Int. Cl.: B65G 47/26

(54) **Method and apparatus for separating products**

(30) Priority: 06.06.1995 GB 9511449
(71) Applicant: HITECH ELECTROCONTROLS LIMITED, West Sussex BN43 6NZ (GB)
(72) Inventor: Hannam, Clifford, Bury, West Sussex RH20 1HB (GB); Harwood, Gerald Alan, Thetford, Norfolk (GB)
(74) Representative: Bayliss, Geoffrey Cyril

(57) **Abstract**

The invention relates to a method of separating products being fed forward to a weighing operation or further processing, comprising separating products (11) travelling on a feed conveyor (10), which are adjacent one another in a direction other than the direction of travel, whereby each separated product is free from interference with an adjacent product during the weighing operation or further processing. In a preferred embodiment, the method comprises stopping the leading products, allowing the products to form a first row (16) or maintain a first row across the conveyor, and releasing the products of said first row in a pre-selected sequence so that adjacent products of said first row are separated from each other during further forward movement. The invention also relates to an apparatus for separating products being fed forward to weighing apparatus or further processing.

## Description

This invention relates to a method and apparatus for separating products. More particularly but not exclusively the invention relates to a system of separating randomly fed products for weighing or further processing.

For accurate and repeatable weighing of a single item amongst a multiplicity of items, it is important that the item to be weighed is separated from the other items at the time of weighing. Known methods exist whereby such separation is accomplished automatically. For example, in the case of weighing machines, items may be separated by using pitching or accelerating conveyers, scrolls or worms for circular containers, and pusher or interrupter systems.

Usually, a separating method must be adapted to handle a succession of items, described generally hereinafter as products, which are not uniformly pitched and thus arrive at the input to the weighing machine at random intervals. In the case in which products are fed singly, one following the other, and are maintained in that manner for weighing or further processing, adequate separation can be achieved by known systems. However, when products are fed or to be arranged in rows of perhaps ten or more across, separation systems are unknown.

In many food, pharmaceutical or chemical processing and packaging lines, packaged product is produced in a "mass flow" configuration. In some instances, filled containers, e.g. yoghurt, cream, mousse and the like, are not only touching adjacent containers but are also physically joined to one or more others. This allows the packer the ability to market the product in multiples of one unit, for example in twos, fours, sixes etc. However, until now, a system of separating such multipacks for weighing has not been available.

According to the invention there is provided a method of separating products being fed forward to a weighing operation or further processing, comprising separating products travelling on a feed conveyor, which are adjacent one another in a direction other than the direction of travel, whereby each separated product is free from interference with an adjacent product during the weighing operation or further processing.

Preferably the products are separated to form a predetermined pattern.

It is also preferred that the leading products on the feed conveyor are stopped to allow the products to form a first row of products, the products in the first row subsequently being released according to a pre-selected sequence.

In a preferred embodiment there is provided a method of separating products being fed forward to a weighing operation or further processing, comprising feeding products forward on a feed conveyor, stopping the leading products, allowing the products to form a first row or maintain a first row across the conveyor, and releasing the products of said first row in a pre-selected sequence so that adjacent products of said first row are separated from each other during further forward movement, whereby each separated product is free from interference with an adjacent product during the weighing operation or further processing.

Preferably the method includes the step of detecting when the first row of products is full, and actuating the release of selected, non-adjacent products from the first row.

Products in a second row are preferably held from moving forward during the step of releasing the products in the first row.

The invention also provides apparatus for separating products being fed forward to weighing apparatus or further processing, comprising means for separating products on a feed conveyor which are adjacent one another in a direction other than the direction of travel, whereby each separated product is free from interference with an adjacent product when being weighed or during further processing.

Preferably the separating means are adapted to separate adjacent products according to a predetermined pattern.

It is also preferred that the separating means are provided in combination with a feed conveyor, the separating means comprising a series of gates disposed across the feed conveyor which gates are movable between respective operative positions in which the leading products are stopped to allow them to form a first row across the feed conveyor, and inoperative open positions in which products in the first row can move forward, and control means for opening the gates in a preselected sequence.

In a preferred embodiment there is provided apparatus for separating products being fed forward to weighing apparatus or further processing, comprising a feed conveyor on which products are travelling forward, means for stopping the leading products whereby the leading products form into a first row or maintain a first row across the conveyor, the stop means comprising a series of gates disposed across the conveyor, each gate being associated with an individual product in said first row and being movable between a stop position and a release position, and control means for releasing the gates in a pre-selected sequence so that adjacent products of said first row are separated from each other during further forward movement, whereby each separated product is free from interference with an adjacent product during the weighing operation or further processing.

In one embodiment the gates are interlinked so that alternate gates or another combination of gates are opened simultaneously.

Means are preferably produced for holding products in a second row during the release of products in the first row. Preferably the control means for opening the gates are actuated by the detecting means.

By way of example, specific embodiments in accordance with the invention will be described with reference to the accompanying diagrammatic drawings in which:-
Figure 1 is a side elevation of a conveyor system for forming randomly fed products into rows and separating the products for weighing individually; and
Figure 2 is a plan view of the conveyor system of Figure 1.

In this example, there is illustrated a conveyor 10 on which packaged or part packaged products shown as individual cylindrical containers 11 are fed randomly towards a weighing conveyor 12 and subsequently onto an exit conveyor 13. It will be appreciated, that, in practice, each container shown may be an individual container or a multi-pack of the kind mentioned above. In each case the products or containers 11 produced by, for example, a packaging machine (not shown) are positioned on the feed conveyor 10 in random fashion both longitudinally and transversely of the conveyor. The purpose of this embodiment is to form the containers 11 into channels longitudinally of the conveyor 10 and rows transversely of the conveyor, so that they can be fed separately in a required pattern for weighing individually before passing onto the exit conveyor 13.

The powered feed conveyor 10 is a conventional arrangement which allows the containers to slip as each container is stopped or slowed down. A multiplicity of small diameter wheels or rods are arranged so that their drive is just adequate to maintain movement of the containers but the drive is able to slip as any container's resistance to travel increases.

The weighing conveyor 12, in this embodiment, is formed of eight belts or strips 14 extending side by side and longitudinally of the container path whereby a container on each belt 14 can be weighed individually of a container on an adjacent belt. The weighing machine (not shown) for weighing the container on each belt is conventional and need not be described.

The exit conveyor 13 is a continuously driven conveyor of conventional design.

At or adjacent the downstream end of the feed conveyor 10 there are provided gate means 15 for stopping the leading containers in each of eight channels so that they form themselves into a first row 16 of eight containers spread evenly across the conveyor. Usually, as in this embodiment, the gate means comprises the same number of retractable gates as there are channels, i.e. one gate for each container, each gate 17, for example, comprising the plunger of a pneumatic cylinder or solenoid which is controllably movable between a lowered operative position and a raised inoperative position. Other arrangements of gate means which may be electrically, pneumatically cr otherwise operated, may be employed provided that the gates can be moved to stop the respective containers of the first row or selectively withdrawn or otherwise opened to allow the respective container to move forward onto the particular weighing belt 14. It will be appreciated that the number of channels, and thereby the number of gates can be varied as desired. Each plunger assembly or other construction of gate may also be operated from above or below or from in front of the respective container. Non-adjacent gates 17 may be interlinked, as in this embodiment, so that they move together. Alternatively, other combinations of gates may be interlinked.

Behind the gate means 15 in the direction of travel is a releasable clamp or holding means 18 which temporarily prevents the second row 19 of containers from moving forward. In this embodiment, the clamping means is shown as a bar 20 which is lowered onto the top of the second row of containers, but any suitable method may be provided.

A detector system, illustrated at 21, is capable of detecting the leading container in each channel.

A programmable controller 22 accepts information from the detector 21, and gives output signals which control and synchronise operation of the plungers of the gates 17 and the clamp bar 20 .

In operation, containers 11 travelling on the feed conveyor 10 are stopped by the gate means 15 and build up to form a first row of eight containers across the conveyor in separate channels, each container being aligned with one of the eight belts 14 of the weighing conveyor 12. The containers also form themselves into second 19 and third rows etc. During the initial buildup, the clamp bar 20 is in its raised, release position, and the system remains in this condition until all the available channels at the gate means 15 are full. This is detected by the detector 21.

When all the eight channels of this embodiment in the first row 16 are full, the clamp bar 20 is lowered to hold firmly any and all of the containers in the second row 19.

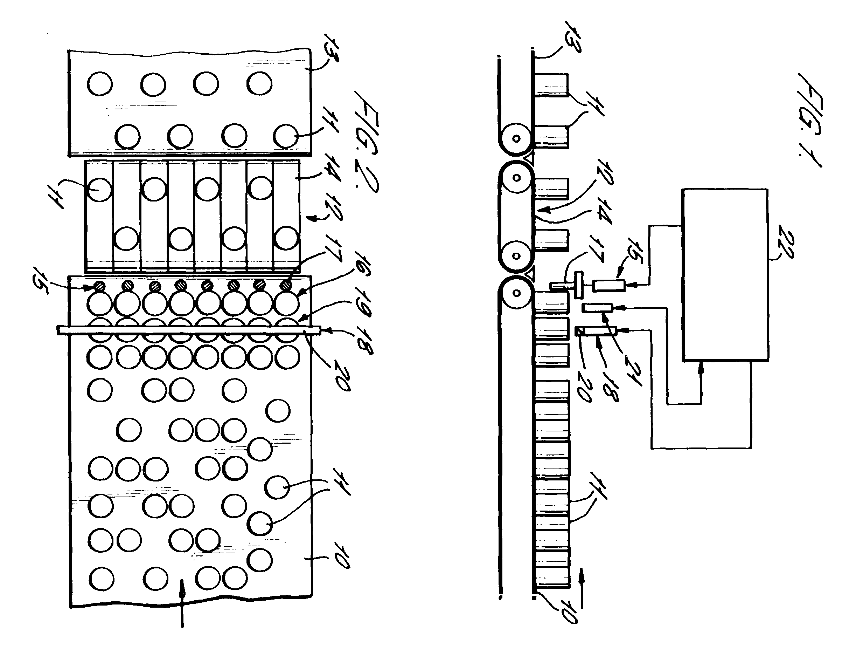

Following the clamping of the second row 19 by the bar 20 the controller 22 raises a pre-selected combination of plungers 17 of the gate means 15, which in this embodiment is four, alternate plungers allowing the respective four non-adjacent containers to move forward onto their particular belts 14 of the weighing conveyor 12. Subsequently, the other four plungers are raised allowing the remaining four containers of the first row to move forward onto their belts 14. In this way, as shown in Figure 2, the containers of the first row 16 are simply separated into two staggered rows with each container spaced from its neighbour or neighbours allowing the containers to be individually weighed without interference from the adjacent containers. It will be appreciated that other arrangements may be achieved by different control selections of the gate means 15.

The detector 21 confirms that all containers have left the first row 16 and the controller 22 is actuated to cause all the plungers 17 of the gate means 15 to be lowered into their operative stop positions.

At the same time or thereafter, the clamp bar 20 is raised to release the containers of the second row 19 to allow them to move forward until they are stopped by the gate means 15 thereby becoming the first row and filling each and every channel. Once each channel is full, detector 21 restarts the cycle.

Although, the above embodiment envisages the products or containers 11 being fed forward randomly on the feed conveyor 10, another packaging machine may position the products or containers in rows which are then fed to the downstream end already aligned as shown.

In a further embodiment, which is generally similar to the embodiment illustrated but which involves multipacks, each pack may occupy the space of more than one container 11 shown, i.e. two or three containers transversely of the feed conveyor. Each pack in the first row 16 thereby becomes aligned with two or three adjacent gates 17 and the respective weighing belts 17 rather than just one gate and one weighing belt. In the subsequent operation, the plunger assemblies of the gates concerned are operated together, but the respective gates for adjacent packs are still released at different times so that adjacent packs are separated and do not interfere with each other during weighing. The weighing measurements of the belts 17 for each pack are interlinked to give a total weight for the pack.

The invention is not limited to the specific details of the embodiments described above. For example, the weighing conveyor may be constructed differently whilst allowing containers 11 to be weighed individually and separated from its neighbours. The particular pattern or formation of the separated containers may be varied as desired.

Also, the weighing conveyor may be replaced by apparatus for further processing of the containers 11 thereby performing an operation other than weighing.

## Claims

1. A method of separating products being fed forward to a weighing operation or further processing, comprising separating products travelling on a feed conveyor, which are adjacent one another in a direction other than the direction of travel, whereby each separated product is free from interference with an adjacent product during the weighing operation or further processing.

2. A method as claimed in Claim 1, wherein adjacent products are separated to form a predetermined pattern.

3. A method as claimed in Claim 1 or Claim 2, wherein the leading products on the feed conveyor are stopped to allow the products to form a first row of products, the products in the first row subsequently being released according to a pre-selected sequence.

4. A method of separating products being fed forward to a weighing operation or further processing, comprising feeding products forward on a feed conveyor, stopping the leading products, allowing the products to form a first row or maintain a first row across the conveyor, and releasing the products of said first row in a pre-selected sequence so that adjacent products of said first row are separated from each other during further forward movement, whereby each separated product is free from interference with an adjacent product during the weighing operation or further processing.

5. A method as claimed in Claim 3 or Claim 4, including the step of detecting when the first row of products is full, and actuating the release of selected, non-adjacent products from the first row.

6. A method as claimed in any one of Claims 3 to 5, wherein products in a second row are held from moving forward during the step of releasing the products in the first row.

7. Apparatus for separating products being fed forward to weighing apparatus or further processing, comprising means for separating products on a feed conveyor which are adjacent one another in a direction other than the direction of travel, whereby each separated product is free from interference with an adjacent product when being weighed or during further processing.

8. Apparatus as claimed in Claim 7, wherein the separating means are adapted to separate adjacent products according to a predetermined pattern.

9. Apparatus as claimed in Claim 7 or Claim 8, wherein the separating means are provided in combination with a feed conveyor, the separating means comprising a series of gates disposed across the feed conveyor which gates are movable between respective operative positions in which the leading products are stopped to allow them to form a first row across the feed conveyor, and inoperative open positions in which products in the first row can move forward, and control means for opening the gates in a preselected sequence.

10. Apparatus for separating products being fed forward to weighing apparatus or further processing, comprising a feed conveyor on which products are travelling forward, means for stopping the leading products whereby the leading products form into a first row or maintain a first row across the conveyor, the stop means comprising a series of gates disposed across the conveyor, each gate being associated with an individual product in said first row and being movable between a stop position and a release position, and control means for releasing the gates in a pre-selected sequence so that adjacent products of said first row are separated from each other during further forward movement, whereby each separated product is free from interference with an adjacent product during the weighing operation or further processing.

11. Apparatus as claimed in Claim 9 or Claim 10, wherein the gates are interlinked so that alternate gates or another combination of gates are opened simultaneously.

12. Apparatus as claimed in any one of Claims 9 to 11, including means for holding products in a second row during the release of products in the first row.

13. Apparatus as claimed in any one of Claims 9 to 12, including means for detecting when the first row is full.

14. Apparatus as claimed in Claim 13, wherein the control means for opening the gates are actuated by said detecting means.
